# EUROPÄISCHE PATENTSCHRIFT

(11) **EP 4 390 491 B1**
(45) Veröffentlichungstag und Bekanntmachung des Hinweises auf die Patenterteilung: **29.01.2025**
(21) Anmeldenummer: 23208652.0
(22) Anmeldetag: 08.11.2023
(51) Int. Cl.: G02B 7/02, G02B 27/62, G01S 7/481, G01S 7/497

(54) **JUSTAGE-VORRICHTUNG UND JUSTAGE-VERFAHREN**
ADJUSTMENT DEVICE AND ADJUSTMENT METHOD
DISPOSITIF ET PROCÉDÉ D'AJUSTEMENT

(30) Priorität: 22.12.2022 DE 102022134544
(43) Veröffentlichungstag der Anmeldung: 26.06.2024
(73) Patentinhaber: SICK AG, 79183 Waldkirch (DE)
(72) Erfinder: Jägel, Matthias, 79104 Freiburg (DE); Baumgartner, August, 79280 Au (DE)

(56) Entgegenhaltungen:
- EP-B1- 2 370 189
- DE-A1- 102005 046 154
- DE-A1- 102007 047 109

## Beschreibung

Die Erfindung betrifft eine Justage-Vorrichtung zum Justieren eines optischen Elements zu einer Lichtsende- oder Lichtempfangseinheit eines optoelektronischen Sensors gemäß dem Anspruch 1 und ein Justage-Verfahren gemäß dem Anspruch 9.

Ein optoelektronischer Sensor, wie beispielsweise ein Codelesegerät, wird in vielen Bereichen des Alltags eingesetzt, um Informationsdaten aus einem Bildobjekt auszulesen, wobei das Bildobjekt in Form eines eindimensionalen oder zweidimensionalen Strichcodes ausgebildet sein kann. Hierzu weist der optoelektronische Sensor eine Lichtsende- und Lichtempfangseinheit auf, die auf einer Elektronikkarte angeordnet ist. Die Lichtsendeeinheit dient zum Beleuchten eines Lesebereichs des Sensors, um insbesondere das Bildobjekt zu belichten, und die Lichtempfangseinheit dient zum Empfangen von von dem Bildobjekt remittierten Licht, um aus dem empfangenen Licht Signale zum Ermitteln der Informationsdaten des Bildobjekts zu erzeugen.

Zur Verbesserung der Sende- bzw. Empfangsleistung wird der Lichtsende- und/oder Lichtempfangseinheit ein optisches Element, vorzugsweise in Form einer Linse, zugeordnet, das in einem Optikträger gelagert und mit dem Optikträger befestigt ist, insbesondere verklebt oder verschraubt. Hierzu wird der Optikträger mit dem optischen Element ortsfest in einer definierten Position relativ zu der Lichtsende- bzw. Lichtempfangseinheit angeordnet. Eine Genauigkeit der Positionierung des optischen Elements in dem Optikträger in Bezug zu der Lichtsende- bzw. Lichtempfangseinheit spielt hierbei eine zentrale Rolle für die Leistungsfähigkeit des Sensors.

Hierzu muss das optische Element in Bezug zu der Lichtsende- bzw. Lichtempfangseinheit justiert werden. Bei einer Justage wird anhand eines Optimums für einen geeigneten Messparameter, wie beispielsweise eine Schärfe eines Laserspots oder eines Empfangssignalpegels, eine optimale Betriebsposition des optischen Elements innerhalb des Optikträgers gegenüber der Lichtsende- bzw. Lichtempfangseinheit ermittelt und das zu justierende optische Element in dieser Betriebsposition positioniert und befestigt. Das Befestigen erfolgt vorzugsweise durch UV-Licht selbsthärtenden Kleber.

Eine justierte Fixierung des optischen Elements in drei Dimensionen stellt, zum Beispiel aufgrund eines Verzugs des Klebstoffs beim Aushärten, ein aufwändig zu lösendes Problem dar. Um das Problem zu lösen, können Freiheitsgrade des optischen Elements bei der Justage reduziert oder die Justage auf verschiedene Komponenten aufgeteilt werden.

Zu einer Reduzierung der Freiheitsgrade wird beispielsweise das optische Element mittels eines Greifers in einer Ebene fixiert und in Richtung eines zu der Ebene senkrecht stehenden Freiheitsgrads mittels einer hochgenauen Verfahrachse in die Betriebsposition verfahren. Es kann durch das Greifen des Greifers jedoch bereits eine mechanische Überbestimmung vorliegen, so dass ein spielfreies Halten nicht gewährleistet ist. Eine stabile, völlig kräftefreie Fixierung des zu justierenden optischen Elements ist nur schwer oder gar nicht zu realisieren.

Aus der DE 10 2005 046 154 A1 ist ein Messsystem zum Inspizieren einer Oberfläche, bei dem ein Messkopf mit einem Sensor mittels einer Luftlagerung präzise in der Höhe (z-Richtung) über eine Substratfäche justiert/positioniert werden kann. Durch eine Auslassöffnung austretende Luft erzeugt ein Luftkissen, auf dem der Messkopf frei über der Substratoberfläche gleiten kann. Die Stärke der Luftströmung bestimmt die Höhe des Luftkissens und damit den vertikalen Abstand des Messkopfes über der Substratoberfläche. Durch ein mechanisches Flächen-Positioniersystem kann der Messkopf zusätzlich in der x-y-Ebene relativ zu dem Substrat positioniert werden, um die Substratoberfläche abzufahren.

Eine Aufteilung der Freiheitsgrade auf verschiedene Komponenten ist aufwändig und eine gewisse Toleranz unvermeidbar, so dass sich eine Ungenauigkeit der Justage des optischen Elements ergeben kann.

Es ist daher eine Aufgabe der Erfindung, eine Justage-Vorrichtung zum Justieren eines optischen Elements relativ zu einer Lichtsende- oder Lichtempfangseinheit eines optoelektronischen Sensors bereitzustellen, die eine einfache und präzise Justage des optischen Elements gewährleistet.

Die Aufgabe wird erfindungsgemäß durch eine Justage-Vorrichtung mit den Merkmalen des Anspruchs 1 gelöst.

Hierbei ist die Justage-Vorrichtung zum Justieren eines optischen Elements relativ zu einer Lichtsende- oder Lichtempfangseinheit eines optoelektronischen Sensors, wobei das optische Element in einem zylindrischen Optikträger gelagert ist und die Lichtsende- bzw. Lichtempfangseinheit auf einer Elektronikkarte des Sensors angeordnet ist, derart ausgebildet, dass der Optikträger ortsfest in einer definierten Position relativ zu der Lichtsende- bzw. Lichtempfangseinheit anordenbar ist, und dass Druckluft in den Optikträger einleitbar ist, um das in dem Optikträger vorgesehene optische Element in Richtung eines ersten und eines zweiten Freiheitsgrads innerhalb des Optikträgers quer zu einer Längsachse zu fixieren und um das optische Element in Richtung der Längsachse in eine definierte Betriebsposition berührungslos bewegen zu können, wobei das optische Element entlang der Längsachse des Optikträgers zu der Lichtsende- bzw. Lichtempfangseinheit hin oder von der Lichtsende- bzw. Lichtempfangseinheit weg bewegbar ist, so dass das optische Element gegenüber der Lichtsende- bzw. Lichtempfangseinheit in die definierte Betriebsposition ausrichtbar und in der Betriebsposition befestigbar ist, in der das optische Element gegenüber der Lichtsende- bzw. Lichtempfangseinheit justiert ist.

Hieraus ergibt sich der technische Vorteil, dass das optische Element ohne eine mechanische Überbestimmung durch die Justage-Vorrichtung in Richtung von zwei Freiheitsgraden stabil und spielfrei fixiert ist, bei gleichzeitiger Bewegbarkeit in Richtung eines zu den beiden anderen Freiheitsgraden senkrechten dritten Freiheitsgrads. Hierbei umfasst das optische Element vorzugsweise eine Linse.

Durch das berührungslose Bewegen des optischen Elements kann somit vorteilhafterweise sowohl die Kollimation der Lichtsende- bzw. Lichtempfangseinheit als auch die Winkelausrichtung gleichzeitig ausgeführt werden. Ein entsprechendes Regeln der zugeführten Druckluft ist auszuführen.

Gemäß Anspruch 1 sind an einer Innenwand des Optikträgers zumindest zwei Nuten vorgesehen, die sich parallel zu der Längsachse des Optikträgers erstrecken und zum Leiten der Druckluft ausgebildet sind. Vorteilhafterweise sind die Nuten an der Innenwand in gleichen oder ungleichen Abständen, insbesondere Winkelabständen, zueinander angeordnet. Damit ist ein vielfältiger Einsatz der Justage-Vorrichtung möglich, da die Nuten bei der Herstellung des Optikträgers eingeplant und vorgesehen werden können, so dass unterschiedliche Sensortypen, insbesondere mit unterschiedlichen optischen Elementen, mit der Justage-Vorrichtung justiert werden können.

Bei einer Anordnung der Nuten in gleichen Abständen zueinander ergibt sich der Vorteil, dass das optische Element im Innern des Optikträgers einfach zentriert werden kann, wobei vorausgesetzt wird, dass die offenen Seiten der Nuten gleich große Dimensionen haben, so dass der in den Nuten herrschende Luftdruck je Nut gleich große Kräfte auf das optische Element ausübt. Wenn die Nuten wiederum in ungleichen Abständen zueinander an der Innenwand des Optikträgers vorgesehen sind, kann auf das optische Element durch den Luftdruck eine gezielte seitliche Kraft ausgeübt werden, um eine Stelle der Innenwand des Optikträgers als Anschlag für das optische Element an den Optikträger bei der Justage zu nutzen. Ein Verzug der Position des optischen Elements kann durch einen solchen Anschlag reduziert werden.

Ferner ist gemäß einem weiteren bevorzugten Ausführungsbeispiel entlang einer Nut zumindest eine Ausnehmung vorgesehen, die eine größere Querschnittfläche und damit größere Angriffsfläche für den Luftdruck als die Nut aufweist. Daraus ergibt sich der Vorteil, dass sich im Bereich der Ausnehmung aufgrund der größeren Angriffsfläche eine größere Druckkraft auf eine Außenfläche des optischen Elements als entlang der Nut ergibt. Dadurch kann eine stärkere Fixierung des optischen Elements an der Stelle der Ausnehmung erzielt werden. Vorteilhafterweise weist die Ausnehmung eine definierte Länge und eine definierte Breite auf, so dass eine vordefinierte Größe der Druckkraft an der Stelle der Ausnehmung einfach geplant und ausgebildet werden kann. Insbesondere sind die definierte Länge und Breite der Ausnehmung in Abhängigkeit zu einem Umfang des optischen Elements auslegbar.

Gemäß einem weiteren bevorzugten Ausführungsbeispiel ist die Justage-Vorrichtung derart ausgebildet, dass die Druckluft zwischen einem der Elektronikkarte zugewandten Ende des Optikträgers und der Elektronikkarte in den Optikträger zuführbar ist, oder die Druckluft ist mittels in der Elektronikkarte vorgesehenen Öffnungen durch die Elektronikkarte in den Optikträger zuführbar.

Es ist ferner eine Aufgabe der vorliegenden Erfindung, ein Justage-Verfahren zum Justieren eines optischen Elements relativ zu einer Lichtsende- oder Lichtempfangseinheit eines optoelektronischen Sensors bereitzustellen, mit dem eine präzise und spielfreie Justage des optischen Elements einfach ausgeführt werden kann.

Die Aufgabe wird erfindungsgemäß durch ein Verfahren mit den Merkmalen des Anspruchs 9 gelöst.

Hierbei umfasst das Justage-Verfahren, wobei das optische Element in einem zylindrischen Optikträger gelagert ist und die Lichtsende- bzw. Lichtempfangseinheit auf einer Elektronikkarte des Sensors angeordnet ist, die Schritte:
Platzieren des Optikträgers ortsfest in einer definierten Position relativ zu der Lichtsende- bzw. Lichtempfangseinheit,
Einführen des optischen Elements in den Optikträger,
Zuführen von Druckluft in den Optikträger, um das optische Element in Richtung eines ersten und eines zweiten Freiheitsgrads innerhalb des Optikträgers quer zu einer Längsachse des Optikträgers zu fixieren,
Regeln der zugeführten Druckluft, um das optische Element berührungslos in Richtung der Längsachse in einer definierten Betriebsposition zu bewegen und gegenüber der Lichtsende- bzw. Lichtempfangseinheit auszurichten, und
Befestigen des optischen Elements in der Betriebsposition, in der das optische Element gegenüber der Lichtsende- bzw. Lichtempfangseinheit justiert ist.

Hierdurch ergibt sich der technische Vorteil, dass das optische Element entlang der Längsachse des Optikträgers bei gleichzeitiger Fixierung quer dazu in Richtung der anderen relevanten Freiheitsgrade justierbar ist.

Vorzugsweise wird das optische Element innerhalb des Optikträgers entlang der Längsachse des Optikträgers zu der Lichtsende- bzw. Lichtempfangseinheit hin oder von der Lichtsende- bzw. Lichtempfangseinheit wegbewegt.

Insbesondere wird das optische Element mittels Klebstoff an dem Optikträger in der Betriebsposition befestigt. Vorteilhafterweise wird die Druckluft abgeschaltet, nachdem das Befestigen des optischen Elements vollendet ist. Mit anderen Worten, die Druckluft wird so lange zugeführt, bis zum Beispiel der Klebstoff vollständig ausgehärtet ist.

Ferner wird vorzugsweise die Druckluft entsprechend einer Abweichung der Position des optischen Elements von der definierten Betriebsposition nachgeregelt, wenn beim Befestigen des optischen Elements die Abweichung erfasst wird. Hierdurch kann durch die Nachregelung der zugeführten Druckluft die Fixierung des optischen Elements in Abhängigkeit einer Aushärtung des Klebstoffs eingestellt werden. Zusätzlich wird einem Verzug durch den Klebstoff entgegengewirkt.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1A: eine schematische Darstellung eines bevorzugten Ausführungsbeispiels einer erfindungsgemäßen Justage-Vorrichtung mit Hauptkomponenten eines optoelektronischen Sensors,
- Fig. 1B: eine schematische Darstellung eines weiteren bevorzugten Ausführungsbeispiels der erfindungsgemäßen Justage-Vorrichtung,
- Fig. 2A: eine dreidimensionale Darstellung eines bevorzugten Ausführungsbeispiels eines Optikträgers mit einem optischen Element der erfindungsgemäßen Justage-Vorrichtung,
- Fig. 2B: eine Draufsicht auf das bevorzugte Ausführungsbeispiel des Optikträgers der Figur 2A,
- Fig. 3A: eine dreidimensionale Darstellung eines weiteren bevorzugten Ausführungsbeispiels eines Optikträgers mit einem optischen Element der erfindungsgemäßen Justage-Vorrichtung,
- Fig. 3B: eine Draufsicht auf das bevorzugte Ausführungsbeispiel des Optikträgers der Figur 3A, und
- Fig. 3C: einen Ausschnitt einer Detailschnittansicht des bevorzugten Ausführungsbeispiels des Optikträgers der Figur 3A.

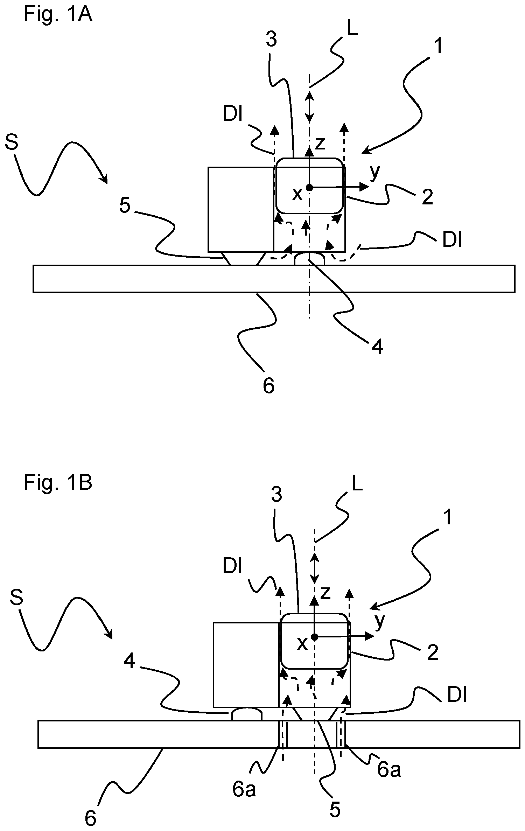

Figur 1A zeigt eine schematische Darstellung eines bevorzugten Ausführungsbeispiels einer erfindungsgemäßen Justage-Vorrichtung 1, bei der ein zylindrischer Optikträger 2 ortsfest in einer definierten Position relativ zu einer Lichtsendeeinheit 4 eines optoelektronischen Sensors S angeordnet ist. Die Lichtsendeeinheit 4 des Sensors S ist neben einer zugehörigen Lichtempfangseinheit 5 positioniert, wobei die Lichtsende- 4 bzw. Lichtempfangseinheit 5 auf einer Elektronikkarte 6 des Sensors S angeordnet ist.

In dem zylindrischen Optikträger 2 ist ein optisches Element 3 gelagert, das vorzugsweise eine optische Linse umfasst, wobei mittels der erfindungsgemäßen Justage-Vorrichtung 1 das optische Element 3 relativ zu der Lichtsendeeinheit 4 justierbar ist.

Hierbei ist die Justage-Vorrichtung 1 derart ausgebildet, dass Druckluft Dl - wie durch die gestrichelten Pfeile dargestellt - in den Optikträger 2 einleitbar ist. Die Druckluft DI ist insbesondere zwischen einem der Elektronikkarte 6 zugewandten Ende des Optikträgers 2 und der Elektronikkarte 6 in den Optikträger 2 zuführbar, wobei die Druckluft DI durch nicht dargestellte Druckluftleitungen geleitet ist.

Hierdurch ist ein berührungsloses Bewegen des in dem Optikträger 2 vorgesehenen optischen Elements 3 entlang einer Längsachse L des Optikträgers 2 - gemäß dem dargestellten Doppelpfeil - möglich, denn bei aufrechtstehendem Optikträger 2 wirkt auf das optische Element 3 einerseits die Schwerkraft und andererseits eine dem entgegengerichtete Druckkraft, die durch den Luftdruck erzeugt ist. Durch die Justierung und Balance dieser beiden Kräfte kann das optische Element 3 in die gewünschte Betriebsposition entlang der Längsachse L gebracht und gehalten werden. In dieser Betriebsposition, in der das optische Element 3 gegenüber der Lichtsendeeinheit 4 justiert ist, kann es festgemacht werden, beispielsweise durch Kleben.

Da das optische Element 3 in den Optikträger 2 nicht eingepresst ist, kann es sich, bevor es verklebt wird, noch in Richtung eines ersten Freiheitsgrads x und eines zweiten Freiheitsgrads y innerhalb des Optikträgers 2 quer zu der Längsachse L zu einem gewissen Grade bewegen. Der erste Freiheitsgrad x ist als x-Achse dargestellt, die senkrecht zu der Figur 1 steht und aus der Blattebene herauszeigt. Der zweite Freiheitsgrad y ist als y-Achse dargestellt, die parallel zu der Elektronikkarte 6 verläuft und in der Blattebene liegt.

Die Druckluft DI wird nun auch dazu genutzt, das optische Element 3 quer zur Längsrichtung L zu halten. Dazu weist der Optikträger 2 an einer Innenwand 7 eine Mehrzahl an Nuten 8 auf, die sich parallel zu der Längsachse L des Optikträgers 2 erstrecken und durch die die eingeleitete Druckluft DI geführt ist. Zwar wird auch ein kleiner Teil der Druckluft DI durch den Zwischenraum zwischen optischem Element 3 und Optikträger 2 treten, dieser Teil soll allerdings vernachlässigbar gegenüber dem Anteil der Druckluft DI sein, der durch die Nuten 8 strömt. Durch den Druck der Luft in den Nuten 8 wirken an jeder offenen Seite einer Nut 8 seitliche Druckkräfte F auf das optische Element 3.

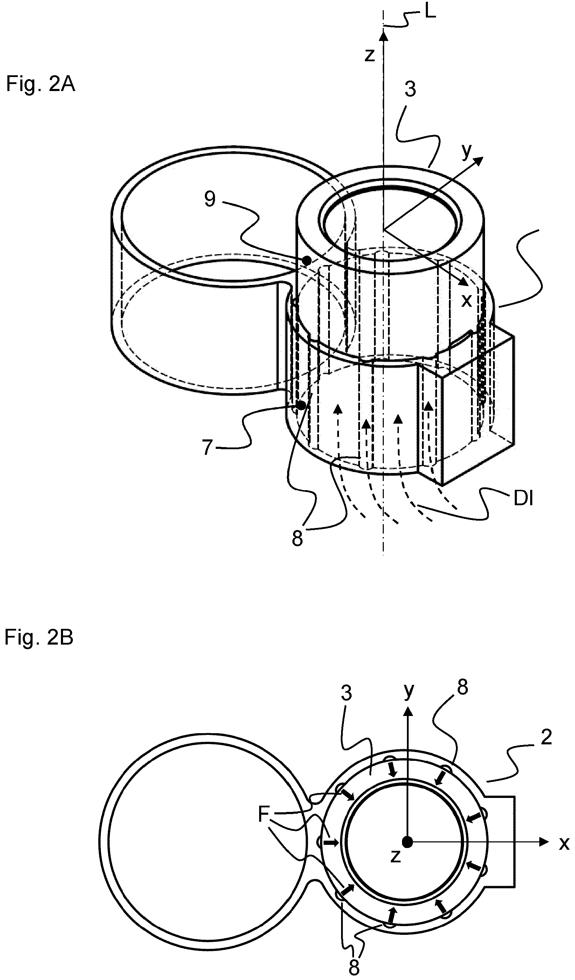

Im ersten Ausführungsbeispiel sind die Nuten 8 vorzugsweise in einem gleichen Winkelabstand voneinander angeordnet und haben gleiche Dimensionen, also gleich dimensionierte offene Seiten. Die gleich beabstandete Anordnung der Nuten 8 zueinander ist aus der Figur 2B ersichtlich, die eine Draufsicht auf das bevorzugte Ausführungsbeispiel des Optikträgers 2 mit dem optischen Element 3 der Figur 2A darstellt. Durch die Nuten 8 strömt ein Teil der eingeleiteten Druckluft DI an einer Außenseite 9 des optischen Elements 3 entlang der Längsachse L in Richtung der z-Achse. Die in den Nuten 8 strömende Druckluft DI bewirkt radial nach innen gerichtete Druckkräfte F, die schematisch als schwarze Pfeile dargestellt sind. Diese Druckkräfte F halten das optische Element 3 mittig im Optikträger 2, so dass das optische Element 3 in Richtung des ersten und des zweiten Freiheitsgrads x und y bzw. in Richtung der x- und y-Achse quer zu dem dritten Freiheitsgrad z bzw. der z-Achse fixiert ist. Das optische Element 3 ist innerhalb des Optikträgers 2 dann noch entlang der Längsachse des Optikträgers 2 in Richtung des dritten Freiheitgrads z wie oben beschrieben bewegbar, so dass die Justage des optischen Elements 3 stabil und präzise ohne mechanische Überbestimmung durchgeführt werden kann.

Die eingeleitete Druckluft DI kann, wie oben beschrieben, das optische Element 3 in Richtung eines als z-Achse dargestellten, dritten Freiheitsgrads in die Betriebsposition des optischen Elements 3 bewegen, wobei die Betriebsposition vorzugsweise dadurch bestimmbar ist, dass eine Änderung eines Lichtpunkts der Lichtsendeeinheit 4 während dem berührungslosen Bewegen des optischen Elements 3 überwacht wird und das optische Element 3 sich in der Betriebsposition befindet, wenn der Lichtpunkt der Lichtsendeeinheit 4 optimal eingestellt ist. Damit ist das optische Element 3 gegenüber der Lichtsendeeinheit 4 justiert und kann in der Betriebsposition an dem Optikträger 2 befestigt werden. Die z-Achse ist koaxial zu der Längsachse L des Optikträgers 2.

Vorteilhafterweise ist die eingeleitete Druckluft DI während des Befestigens, insbesondere eines Aushärtens eines Klebers, derart regelbar, dass ein Verzug durch das Aushärten des Klebers ausgeglichen wird, so dass das optische Element 3 zu jedem Zeitpunkt justiert und der Lichtpunkt der Lichtsendeeinheit 4 optimal eingestellt bleibt.

Die Figur 1B zeigt schematisch ein weiteres bevorzugtes Ausführungsbeispiel der erfindungsgemäßen Justage-Vorrichtung 1, wobei gleiche Komponenten wie in der Figur 1A die gleichen Bezugszeichen aufweisen.

In diesem Ausführungsbeispiel sind die Rollen von Lichtsendeeinheit 4 und Lichtempfangseinheit 5 vertauscht und der Optikträger 2 ist ortsfest in der definierten Position jetzt relativ zu der Lichtempfangseinheit 5 angeordnet. Wie zuvor ist mittels der eingeleiteten Druckluft DI das optische Element 3 zur Justage innerhalb des Optikträgers 2 in Richtung des ersten und des zweiten Freiheitsgrads x und y gehalten und berührungslos in Richtung des dritten Freiheitsgrads z bewegbar.

Das heißt, das optische Element 3 ist zu der Lichtempfangseinheit 5 hin oder von der Lichtempfangseinheit 5 weg bewegbar, so dass ein optimaler Lichteinfall eines empfangenen Lichts auf die Lichtempfangseinheit 5 eingestellt werden kann.

Vorteilhafterweise ist bei diesem Ausführungsbeispiel die Druckluft DI mittels in der Elektronikkarte 6 vorgesehenen Öffnungen 6a durch die Elektronikkarte 6 in den Optikträger 2 zuführbar. Hierdurch kann eine Regelung der eingeleiteten Druckluft DI einfach ausgeführt werden.

In der Figur 2A ist eine dreidimensionale Darstellung eines bevorzugten Ausführungsbeispiels des Optikträgers 2 mit dem optischen Element 3 der erfindungsgemäßen Justage-Vorrichtung 1 gezeigt, wobei der Optikträger 2 neun in gleichem Winkelabstand zueinander angeordneten Nuten 8 an der Innenwand 7 des Optikträgers 2 aufweist.

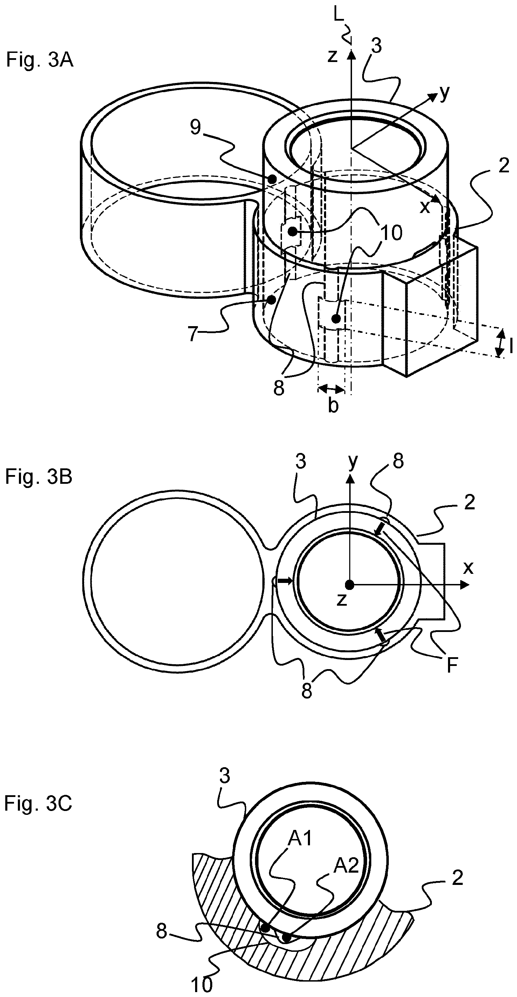

Figur 3A zeigt eine dreidimensionale Darstellung eines weiteren bevorzugten Ausführungsbeispiels des Optikträgers 2 mit dem optischen Element 3 der erfindungsgemäßen Justage-Vorrichtung 1, wobei im Vergleich zu dem Ausführungsbeispiel der Figur 2A eine Anzahl der an der Innenwand 7 des Optikträgers 2 vorgesehenen Nuten 8 reduziert ist.

Bei dem Ausführungsbeispiel sind drei zueinander gleich beabstandet angeordnete Nuten 8 vorgesehen. Entlang jeder Nut 8 ist zumindest eine Ausnehmung 10 vorgesehen, die - wie in der Figur 3C dargestellt - eine größere Querschnittfläche A1 als eine Querschnittfläche A2 der Nut 8 aufweist. Dadurch hat die Ausnehmung 10 eine größere Angriffsfläche für die eingeleitete Druckluft DI als die Nut 8, so dass sich eine größere Druckkraft F ergibt.

Hierbei weist die Ausnehmung 10 vorzugsweise eine definierte Länge I und eine definierte Breite b auf, so dass insbesondere die nach innen offene Seite eine gewünschte Größe hat und damit eine definierte Angriffsfläche der Druckluft DI an das optische Element 3 bietet, womit zu einem gewissen Grad die Druckkraft F an das optische Element 3 über die Geometrie der Ausnehmung 10 eingestellt ist. Dadurch ist das optische Element 3 an der Position, wo die Ausnehmung 10 vorgesehen ist, stärkeren seitlichen Druckkräften F ausgesetzt als in anderen Bereichen der Nut 8 ober- oder unterhalb der Ausnehmung 10.

Insbesondere sind die Länge I und die Breite b der Ausnehmung 10 in Abhängigkeit zu einem Umfang des optischen Elements 3 auslegbar. Hierdurch kann je nach Bedarf die Druckkraft F auf das optische Element 3 durch Anpassung der Geometrie der Ausnehmung 10 ausgelegt werden.

In den Figuren 2A, 2B, 3A und 3B ist eine Anordnung der Nuten 8 dargestellt, bei der die Nuten 8 gleichverteilt über den Umfang sind, also in einem gleichen Winkelabstand zueinander an der Innenwand 7 des Optikträgers 2 angeordnet sind.

Gemäß einem nicht dargestellten Ausführungsbeispiel der Justage-Vorrichtung 1 können die Nuten 8 in einem ungleichen Winkelabstand zueinander angeordnet sein, so dass das optische Element 3 quer zur Längsrichtung eine von Null verschiedene resultierende Kraft erfährt und damit nicht mittig in Bezug zu dem Optikträger 2 gehalten ist, sondern zur Seite hin an eine Stelle der Innenwand 7 des Optikträgers 2 anschlägt. Das heißt, die entsprechende Stelle an der Innenwand 7 des Optikträgers 2 dient als mechanischer Anschlag für das optische Element 3 bei dessen Justage gegenüber der Lichtsende- 4 bzw. Lichtempfangseinheit 5.

Nachfolgend wird das erfindungsgemäße Justage-Verfahren zum Justieren des optischen Elements 3 zu der Lichtsende- 4 oder Lichtempfangseinheit 5 des optoelektronischen Sensors S beschrieben.

Wie bereits erwähnt, ist das optische Element 3 in dem zylindrischen Optikträger 2 gelagert und die Lichtsende- 4 und Lichtempfangseinheit 5 auf der Elektronikkarte 6 des Sensors S angeordnet. Mit dem erfindungsgemäßen Justage-Verfahren kann das optische Element 3 - wie in der Figur 1A dargestellt - relativ zu der Lichtsendeeinheit 4 oder - wie in der Figur 1B dargestellt - relativ zu der Lichtempfangseinheit 5 justiert werden.

Bei dem Justage-Verfahren wird zuerst der Optikträger 2 ortsfest in einer definierten Position relativ zu der Lichtsende- 4 bzw. Lichtempfangseinheit 5 platziert. Das optische Element 3 wird dann in den Optikträger 3 eingeführt.

Wenn das optische Element 3 in den Optikträger 2 eingeführt ist, wird Druckluft DI in den Optikträger 2 eingeleitet. Hierbei kann die Druckluft DI zwischen dem der Elektronikkarte 6 zugewandten Ende des Optikträgers 2 und der Elektronikkarte 6 oder mittels in der Elektronikkarte 6 vorgesehenen Öffnungen 6a durch die Elektronikkarte 6 in den Optikträger 2 eingeleitet werden. Die Druckluft DI strömt in einen Freiraum innerhalb des Optikträgers 2, der von dem optischen Element 3, der Innenwand 7 des Optikträgers 2 und der Elektronikkarte 6 begrenzt ist.

Das optische Element 3 wird durch die Druckluft DI in Richtung des ersten und des zweiten Freiheitsgrads x und y innerhalb des Optikträgers 2 quer zu der Längsachse L des Optikträgers 2 fixiert.

Die Druckluft DI wird derart geregelt, dass das optische Element 3 berührungslos in Richtung der Längsachse L in die Betriebsposition bewegt und gegenüber der Lichtsende- 4 bzw. Lichtempfangseinheit 5 ausgerichtet wird. Insbesondere wird das optische Element 3 innerhalb des Optikträgers 2 entlang der Längsachse L des Optikträgers 3 zu der Lichtsende- 4 bzw. Lichtempfangseinheit 5 hin oder von der Lichtsende- 4 bzw. Lichtempfangseinheit 5 weg bewegt. Hierbei wird vorzugsweise während dem Bewegen des optischen Elements 3 auf einen optimalen Lichtpunkt der Lichtsendeeinheit 4 bzw. auf einen optimalen Lichteinfall auf die Lichtempfangseinheit 5 überwacht.

Das optische Element 3 wird in der Betriebsposition befestigt, in welcher der Lichtpunkt der Lichtsendeeinheit 4 bzw. der Lichteinfall auf die Lichtempfangseinheit 5 optimal ist, so dass das optische Element 3 gegenüber der Lichtsende- 4 bzw. Lichtempfangseinheit 5 justiert ist. Vorzugsweise wird das optische Element 3 mittels Klebstoff, insbesondere UV-Licht selbsthärtenden Klebstoff, an dem Optikträger 2 in der Betriebsposition befestigt. Die Druckluft DI wird vorteilhafterweise dann abgeschaltet, nachdem das Befestigen des optischen Elements 3 vollendet ist.

Zusätzlich wird während des Aushärtens des Klebstoffs auf eine Änderung des Lichtpunkts der Lichtsendeeinheit 4 bzw. des Lichteinfalls auf die Lichtempfangseinheit 5 überwacht und durch gezielte Regelung der Druckluft DI der Änderung entgegengewirkt, so dass ein Verzug verhindert wird und das optische Element 3 gegenüber der Lichtsendeeinheit 4 bzw. der Lichtempfangseinheit 5 zu jedem Zeitpunkt justiert bleibt.

### Bezugszeichen

- 1: Justage-Vorrichtung
- 2: Optikträger
- 3: optisches Element
- 4: Lichtsendeeinheit
- 5: Lichtempfangseinheit
- 6: Elektronikkarte
- 6a: Öffnungen
- 7: Innenwand des Optikträgers
- 8: Nut
- 9: Außenseite des optischen Elements
- 10: Ausnehmung

- A1: Querschnittfläche der Ausnehmung
- A2: Querschnittfläche der Nut
- b: Breite der Ausnehmung
- DI: Druckluft
- F: Druckkraft
- I: Länge der Ausnehmung
- L: Längsachse
- x: erster Freiheitsgrad
- y: zweiter Freiheitsgrad
- z: dritter Freiheitsgrad

## Patentansprüche

1. Justage-Vorrichtung (1) zum Justieren eines optischen Elements (3) relativ zu einer Lichtsende- (4) oder Lichtempfangseinheit (5) eines optoelektronischen Sensors (S), wobei das optische Element (3) in einem zylindrischen Optikträger (2) gelagert ist und die Lichtsende- (4) bzw. Lichtempfangseinheit (5) auf einer Elektronikkarte (6) des Sensors (S) angeordnet ist, und
wobei die Justage-Vorrichtung (1) derart ausgebildet ist, dass der Optikträger (2) ortsfest in einer definierten Position relativ zu der Lichtsende- (4) bzw. Lichtempfangseinheit (5) angeordnet ist, und
dass Druckluft (DI) in den Optikträger (2) einleitbar ist, um das in dem Optikträger (2) vorgesehene optische Element (3) in Richtung eines ersten und eines zweiten Freiheitsgrads (x und y) innerhalb des Optikträgers (2) quer zu einer Längsachse (L) zu fixieren und um das optische Element (3) in Richtung der Längsachse (L) in eine definierte Betriebsposition berührungslos zu bewegen,
wobei das optische Element (3) entlang der Längsachse (L) des Optikträgers (2) zu der Lichtsende- (4) bzw. Lichtempfangseinheit (5) hin oder von der Lichtsende- (4) bzw. Lichtempfangseinheit (5) weg bewegbar ist, so dass das optische Element (3) gegenüber der Lichtsende- (4) bzw. Lichtempfangseinheit (5) in die definierte Betriebsposition ausrichtbar und in der Betriebsposition befestigbar ist, in der das optische Element (3) gegenüber der Lichtsende- (4) bzw. Lichtempfangseinheit (5) justiert ist, wobei an einer Innenwand (7) des Optikträgers (2) zumindest zwei Nuten (8) vorgesehen sind, die sich parallel zu der Längsachse (L) des Optikträgers (2) erstrecken und zum Leiten der Druckluft (DI) ausgebildet sind.

2. Justage-Vorrichtung (1) nach Anspruch 1, wobei das optische Element (3) eine Linse umfasst.

3. Justage-Vorrichtung (1) nach Anspruch 1, wobei die Nuten (8) an der Innenwand (7) in gleichen oder ungleichen Abständen zueinander angeordnet sind.

4. Justage-Vorrichtung (1) nach Anspruch 1 oder 3, wobei entlang einer Nut (8) zumindest eine Ausnehmung (10) vorgesehen ist, die eine größere Querschnittfläche (A1) als eine Querschnittfläche (A2) der Nut (8) aufweist.

5. Justage-Vorrichtung (1) nach Anspruch 4, wobei die Ausnehmung (10) eine definierte Länge (l) und eine definierte Breite (b) aufweist.

6. Justage-Vorrichtung (1) nach Anspruch 5, wobei die definierte Länge (l) und Breite (b) der Ausnehmung (10) in Abhängigkeit zu einem Umfang des optischen Elements (3) auslegbar sind.

7. Justage-Vorrichtung (1) nach einem der vorhergehenden Ansprüche 1 bis 6, wobei die Justage-Vorrichtung (1) derart ausgebildet ist, dass die Druckluft (DI) zwischen einem der Elektronikkarte (6) zugewandten Ende des Optikträgers (2) und der Elektronikkarte (6) in den Optikträger (2) zuführbar ist oder die Druckluft (DI) mittels in der Elektronikkarte (6) vorgesehenen Öffnungen (6a) durch die Elektronikkarte (6) in den Optikträger (2) zuführbar ist.

8. Justage-Verfahren zum Justieren eines optischen Elements (3) relativ zu einer Lichtsende- (4) oder Lichtempfangseinheit (5) eines optoelektronischen Sensors (S), wobei das optische Element (3) in einem zylindrischen Optikträger (2) gelagert ist und die Lichtsende- (4) bzw. Lichtempfangseinheit (5) auf einer Elektronikkarte (6) des Sensors (S) angeordnet ist, umfassend die Schritte:
Platzieren des Optikträgers (2) ortsfest in einer definierten Position relativ zu der Lichtsende- (4) bzw. Lichtempfangseinheit (5),
Einführen des optischen Elements (3) in den Optikträger (2),
Zuführen von Druckluft (DI) in den Optikträger (3), um das optische Element (3) in Richtung eines ersten und eines zweiten Freiheitsgrads (x und y) innerhalb des Optikträgers (2) quer zu einer Längsachse (L) des Optikträgers (2) zu fixieren,
Regeln der zugeführten Druckluft (DI), um das optische Element (3) berührungslos in Richtung der Längsachse (L) in eine definierte Betriebsposition zu bewegen und gegenüber der Lichtsende- (4) bzw. Lichtempfangseinheit (5) auszurichten, und
Befestigen des optischen Elements (3) in der Betriebsposition, in der das optische Element (3) gegenüber der Lichtsende- (4) bzw. Lichtempfangseinheit (5) justiert ist, wobei an einer Innenwand (7) des Optikträgers (2) zumindest zwei Nuten (8) vorgesehen sind, die sich parallel zu der Längsachse (L) des Optikträgers (2) erstrecken und zum Leiten der Druckluft (DI) ausgebildet sind.

9. Justage-Verfahren nach Anspruch 8, wobei das optische Element (3) mittels Klebstoff an dem Optikträger (2) in der Betriebsposition befestigt wird.

10. Justage-Verfahren nach Anspruch 8 oder 9, wobei die Druckluft (DI) abgeschaltet wird, nachdem das Befestigen des optischen Elements (3) vollendet ist.

11. Justage-Verfahren nach einem der vorhergehenden Ansprüche 8 bis 10, wobei die Druckluft (DI) entsprechend einer Abweichung der Position des optischen Elements von der definierten Betriebsposition nachgeregelt wird, wenn beim Befestigen des optischen Elements (3) die Abweichung erfasst wird.

## Claims

1. An adjustment device (1) for adjusting an optical element (3) relative to a light transmission unit (4) or a light reception unit (5) of an optoelectronic sensor (S), wherein the optical element (3) is supported in a cylindrical optics carrier (2) and the light transmission unit (4) and/or the light reception unit (5) is/are arranged on an expansion card (6) of the sensor (S), and
wherein the adjustment device (1) is configured such that the optics carrier (2) is arranged at a fixed location in a defined position relative to the light transmission unit (4) and/or the light reception unit (5); and
wherein compressed air (DI) can be introduced into the optics carrier (2) to fixe the optical element (3) provided in the optics carrier (2) in the direction of a first and a second degree of freedom (x and y) within the optics carrier (2) transversely to a longitudinal axis (L) and to contactlessly move the optical element (3) in the direction of the longitudinal axis (L) into a defined operating position;
wherein the optical element (3) is movable along the longitudinal axis (L) of the optics carrier (2) toward the light transmission unit (4) and/or light reception unit (5) or away from the light transmission unit (4) and/or light reception unit (5) so that the optical element (3) can be aligned in the defined operating position with respect to the light transmission unit (4) and/or light reception unit (5) and can be fastened in the operating position in which the optical element (3) is adjusted with respect to the light transmission unit (4) and/or light reception unit (5); and wherein at least two grooves (8) that extend in parallel with the longitudinal axis (L) of the optics carrier (2) and are configured to conduct the compressed air (DI) are provided at an inner wall (7) of the optics carrier (2).

2. An adjustment device (1) in accordance with claim 1, wherein the optical element (3) comprises a lens.

3. An adjustment device (1) in accordance with claim 1, wherein the grooves (8) are arranged at the same or different distances from one another on the inner wall (7).

4. An adjustment device (1) in accordance with claim 1 or claim 3, wherein at least one recess (10) that has a greater cross-sectional area (A1) than a cross-sectional area (A2) of a groove (8) is provided along the groove (8).

5. An adjustment device (1) in accordance with claim 4, wherein the recess (10) has a defined length (l) and a defined width (b).

6. An adjustment device (1) in accordance with claim 5, wherein the defined length (l) and width (b) of the recess (10) can be adapted in dependence on a periphery of the optical element (3).

7. An adjustment device (1) in accordance with any one of the preceding claims 1 to 6, wherein the adjustment device (1) is configured such that the compressed air (DI) can be supplied into the optics carrier (2) between an end of the optical carrier (2) facing the expansion card (6) and the expansion card (6) or the compressed air (DI) can be supplied into the optics carrier (2) through the expansion card (6) by means of apertures (6a) provided in the expansion card (6).

8. An adjustment method of adjusting an optical element (3) relative to a light transmission unit (4) or a light reception unit (5) of an optoelectronic sensor (S), wherein the optical element (3) is supported in a cylindrical optics carrier (2) and the light transmission unit (4) and/or the light reception unit (5) is/are arranged on an expansion card (6) of the sensor (S), said method comprising the steps:
placing the optics carrier (2) in a fixed location in a defined position relative to the light transmission unit (4) and/or light reception unit (5);
introducing the optical element (3) into the optics carrier (2);
supplying compressed air (DI) into the optics carrier (2) to fix the optical element (3) in the direction of a first and second degree of freedom (x and y) within the optics carrier (2) transversely to a longitudinal axis (L) of the optics carrier (2);
regulating the supplied compressed air (DI) to contactlessly move the optical element (3) in the direction of the longitudinal axis (L) into a defined operating position and to align it with respect to the light transmission unit (4) and/or light reception unit (5); and
fastening the optical element (3) in the operating position in which the optical element (3) is adjusted with respect to the light transmission unit (4) and/or light reception unit (5), with at least two grooves (8) that extend in parallel with the longitudinal axis (L) of the optics carrier (2) and are configured to conduct the compressed air (DI) being provided at an inner wall (7) of the optical carrier (2).

9. An adjustment method in accordance with claim 8, wherein the optical element (3) is fastened to the optics carrier (2) in the operating position by means of adhesive.

10. An adjustment method in accordance with claim 8 or claim 9, wherein the compressed air (Dl) is shut down once the fastening of the optical element (3) has been completed.

11. An adjustment method in accordance with any one of the preceding claims 8 to 10, wherein the compressed air (DI) is readjusted in accordance with a deviation of the position of the optical element from the defined operating position when the deviation is detected on the fastening of the optical element (3).

## Revendications

1. Dispositif d'ajustement (1) pour ajuster un élément optique (3) par rapport à une unité d'émission de lumière (4) ou de réception de lumière (5) d'un capteur optoélectronique (S),
l'élément optique (3) étant logé dans un support cylindrique d'élément optique (2) et l'unité d'émission de lumière (4) ou de réception de lumière (5) étant disposée sur une carte électronique (6) du capteur (S), et
le dispositif d'ajustement (1) étant conçu de telle sorte que le support d'élément optique (2) est disposé de manière fixe dans une position définie par rapport à l'unité d'émission de lumière (4) ou de réception de lumière (5) et que de l'air comprimé (DI) peut être introduit dans le support d'élément optique (2) pour fixer l'élément optique (3), prévu dans le support d'élément optique (2), dans la direction d'un premier et d'un deuxième degré de liberté (x et y) à l'intérieur du support d'élément optique (2) transversalement à un axe longitudinal (L) et pour déplacer sans contact physique l'élément optique (3) dans la direction de l'axe longitudinal (L) jusque dans une position de fonctionnement définie,
dans lequel
l'élément optique (3) peut être déplacé le long de l'axe longitudinal (L) du support d'élément optique (2) vers l'unité d'émission de lumière (4) ou de réception de lumière (5) ou en s'éloignant de l'unité d'émission de lumière (4) ou de réception de lumière (5), de sorte que l'élément optique (3) peut être orienté vers la position de fonctionnement définie par rapport à l'unité d'émission de lumière (4) ou de réception de lumière (5) et peut être fixé dans la position de fonctionnement dans laquelle l'élément optique (3) est ajusté par rapport à l'unité d'émission de lumière (4) ou de réception de lumière (5),
au moins deux rainures (8) étant prévues sur une paroi intérieure (7) du support d'élément optique (2), lesquelles s'étendent parallèlement à l'axe longitudinal (L) du support d'élément optique (2) et sont conçues pour guider l'air comprimé (DI).

2. Dispositif d'ajustage (1) selon la revendication 1,
dans lequel l'élément optique (3) comprend une lentille.

3. Dispositif d'ajustement (1) selon la revendication 1,
dans lequel les rainures (8) sont disposées sur la paroi intérieure (7) à des distances égales ou inégales les unes des autres.

4. Dispositif d'ajustement (1) selon la revendication 1 ou 3,
dans lequel, le long d'une rainure (8), il est prévu au moins un évidement (10) qui présente une surface de section transversale (A1) supérieure à une surface de section transversale (A2) de la rainure (8).

5. Dispositif d'ajustement (1) selon la revendication 4,
dans lequel l'évidement (10) présente une longueur définie (l) et une largeur définie (b).

6. Dispositif d'ajustement (1) selon la revendication 5,
dans lequel la longueur (l) et la largeur (b) définies de l'évidement (10) peuvent être conçues en fonction d'une circonférence de l'élément optique (3).

7. Dispositif d'ajustement (1) selon l'une des revendications précédentes 1 à 6,
dans lequel le dispositif d'ajustage (1) est conçu de telle sorte que l'air comprimé (DI) peut être amené dans le support d'élément optique (2) entre une extrémité du support d'élément optique (2) tournée vers la carte électronique (6) et la carte électronique (6) ou que l'air comprimé (DI) peut être amené dans le support d'élément optique (2) à travers la carte électronique (6) au moyen d'ouvertures (6a) prévues dans la carte électronique (6).

8. Procédé d'ajustement pour ajuster un élément optique (3) par rapport à une unité d'émission de lumière (4) ou de réception de lumière (5) d'un capteur optoélectronique (S), l'élément optique (3) étant logé dans un support cylindrique d'élément optique (2), et l'unité d'émission de lumière (4) ou de réception de lumière (5) étant disposée sur une carte électronique (6) du capteur (S), comprenant les étapes consistant à :
placer le support d'élément optique (2) de manière fixe dans une position définie par rapport à l'unité d'émission de lumière (4) ou de réception de lumière (5),
insérer l'élément optique (3) dans le support d'élément optique (2),
amener de l'air comprimé (DI) dans le support d'élément optique (3), afin de fixer l'élément optique (3) dans la direction d'un premier et d'un deuxième degré de liberté (x et y) à l'intérieur du support d'élément optique (2), transversalement à un axe longitudinal (L) du support d'élément optique (2),
réguler l'air comprimé (DI) amené, afin de déplacer sans contact physique l'élément optique (3) dans la direction de l'axe longitudinal (L) jusque dans une position de fonctionnement définie et de l'orienter par rapport à l'unité d'émission de lumière (4) ou de réception de lumière (5), et
fixer l'élément optique (3) dans la position de fonctionnement dans laquelle l'élément optique (3) est ajusté par rapport à l'unité d'émission de lumière (4) ou de réception de lumière (5),
au moins deux rainures (8) étant prévues sur une paroi intérieure (7) du support d'élément optique (2), lesquelles s'étendent parallèlement à l'axe longitudinal (L) du support d'élément optique (2) et sont conçues pour guider l'air comprimé (DI).

9. Procédé d'ajustement selon la revendication 8,
dans lequel l'élément optique (3) est fixé au support d'élément optique (2) dans la position de fonctionnement au moyen d'un adhésif.

10. Procédé d'ajustement selon la revendication 8 ou 9,
dans lequel l'air comprimé (DI) est coupé une fois que la fixation de l'élément optique (3) est achevée.

11. Procédé d'ajustement selon l'une des revendications précédentes 8 à 10, dans lequel l'air comprimé (DI) est réajusté en fonction d'un écart de la position de l'élément optique par rapport à la position de fonctionnement définie, si ledit écart est détecté lors de la fixation de l'élément optique (3).
